# EUROPÄISCHE PATENTSCHRIFT

(11) **EP 1 218 290 B1**
(45) Veröffentlichungstag und Bekanntmachung des Hinweises auf die Patenterteilung: **01.12.2004**
(21) Anmeldenummer: 00964196.0
(22) Anmeldetag: 18.09.2000
(51) Int. Cl.: C01B 3/32, C01B 3/34, C01B 3/22, C01B 3/24, B01D 53/04, C01B 3/56, H01M 8/06

(54) **VERFAHREN UND VORRICHTUNG ZUR ERZEUGUNG EINES WASSERSTOFF- ODER SYNTHESEGASES UND VERWENDUNG DERSELBEN**
METHOD AND DEVICE FOR PRODUCING A HYDROGEN OR SYNTHESIS GAS AND USE THEREOF
PROCEDE ET DISPOSITIF POUR PRODUIRE UN GAZ HYDROGENE OU UN GAZ DE SYNTHESE ET SON UTILISATION

(30) Priorität: 28.09.1999 DE 19946381
(43) Veröffentlichungstag der Anmeldung: 03.07.2002
(73) Patentinhaber: Zentrum für Sonnenenergie- und Wasserstoff-Forschung Baden-Württemberg, 70565 Stuttgart (DE)
(72) Erfinder: SPECHT, Michael, 71111 Waldenbuch (DE); BANDI, Andreas, 70184 Stuttgart (DE); BAUMGART, Frank, 72160 Horb (DE); WEIMER, Thomas, 71065 Sindelfingen (DE)
(74) Vertreter: Weller, Erich W.
(86) Internationale Anmeldenummer: PCT/EP2000/009125
(87) Internationale Veröffentlichungsnummer: WO 2001/023302

(56) Entgegenhaltungen:
- EP-A- 0 742 172
- US-A- 4 010 008
- US-A- 4 061 475
- US-A- 5 079 103
- CARVILL ET AL: "Sorption-Enhanced Reaction Process" AICHE JOURNAL, Bd. 42, Nr. 10, Oktober 1996 (1996-10) - 31. Oktober 1996 (1996-10-31), Seiten 2765-2771, XP000674846
- HUFTON ET AL: "Sorption-Enhanced Reaction Process for Hydrogen Production" AICHE JOURNAL, Bd. 45, Nr. 2, Februar 1999 (1999-02) - 28. Februar 1999 (1999-02-28), Seiten 248-256, XP000978072 in der Anmeldung erwähnt
- DATABASE COMPENDEX [Online] ENGINEERING INFORMATION, INC., NEW YORK, NY, US; Chem Technol Fuels Oils Zeitschrift, Februar 1976 (1976-02) BRUN-TSEKHOVOI ET AL: "Thermodynamics of methane conversion in presence of carbon dioxide absorbent" XP002157265
- Cole J.A. et al: 'Practical Applications...', Proc. of the 1997 Fall Meeting of the Combustion Institute, California

## Beschreibung

Die Erfindung bezieht sich auf ein Verfahren und eine Vorrichtung zur Erzeugung eines kohlendioxidarmen, wasserstoffreichen Gases oder eines konditionierten Synthesegases aus einem kohlenstoffhaltigen Einsatzstoff unter Anwendung einer Pyrolyse- und/oder einer Dampfreformierungsreaktion sowie auf eine Verwendung einer derartigen Vorrichtung.

Mit solchen Verfahren und Vorrichtungen lassen sich beispielsweise regenerative oder fossile Energieträger umsetzen, um Wasserstoffgas zu gewinnen, das als umweltfreundlicher Brennstoff in mobilen und stationären Anwendungen, wie Brennstoffzellenfahrzeugen und Brennstoffzellen-Blockheizkraftwerken, verwendet werden kann, oder um Sekundärenergieträger, wie Methanol, aus biogenen Einsatzstoffen (Biomasse) über die Zwischenstufe des Synthesegases zu erzeugen.

Zur Gewinnung von wasserstoffreichem Gas sind Dampfreformierungsanlagen bekannt, in denen in einem Reformierungsreaktor Methanol, Benzin, Erdgas oder ein ähnlicher kohlenstoffhaltiger Einsatzstoff unter Einsatz von Wasserdampf endotherm reformiert wird. Aus dem Produktgas kann über eine in den Reformierungsreaktor integrierte oder diesem nachgeschaltete Wasserstoffabtrennmembran selektiv Wasserstoff abgetrennt werden. Zusätzlich oder alternativ dazu kann über eine sogenannte CO-Shiftstufe das Produktgas des Reformierungsreaktors über die Wassergas-Gleichgewichtsreaktion von Kohlenmonoxid gereinigt werden. Eine Verminderung des CO-Gehaltes kann auch durch eine partielle CO-Oxidation oder eine CO-Methanisierung erfolgen. Die CO-Shiftreaktion erfolgt typischerweise bei etwas niedrigeren Temperaturen von z.B. bis zu 700°C an geeigneten Katalysatormaterialien, wie z.B. Cu/ZnO oder Fe/Cr-Oxiden. Die Gasreinigung bzw. Gaskonditionierung zur Erzielung eines kohlenmonoxidarmen, wasserstoffreichen Gases kann auch aus einer zweistufigen CO-Shiftreaktion mit einer Hochtemperatur-Shiftstufe und einer Niedertemperatur bestehen. Die endotherme Dampfreformierung wird typischerweise bei Temperaturen von z.B. 600°C bis 900°C mit einem geeigneten, z.B. nickelhaltigen Katalysatormaterial durchgeführt. Die Wasserstofferzeugung aus Methanol ist neuerdings besonders für den Einsatz in Brennstoffzellenfahrzeugen von Interesse und erfolgt z.B. an Cu/ZnO-Katalysatoren auch schon bei niedrigen Temperaturen zwischen etwa 200°C und 300°C. Ausreichend niedrige CO-Konzentrationen sind insbesondere zur Anwendung in Niedertemperatur-Brennstoffzellen, wie PEM-Brennstoffzellen, erforderlich. Bei Bedarf kann vom CO-gereinigten Produktgas reiner Wasserstoff z.B. durch einen Druckwechseladsorptionsprozeß (PSA) abgetrennt werden, wobei das Restgas (Retentat) zur indirekten Beheizung des Dampfreformierungsreaktors dienen kann.

In der Veröffentlichung J.A. Cole und R.K. Lyon, Practial Applications of Unmixed Combustion, Beitrag Nr. 97F-114, Proc. of the 1997 Fall Meeting of the Combustion Institute, California ist ein sogenannter UMC(Unmixed Combustion)-Prozeß beschrieben, der zur Dampfreformierung von z.B. Methan in einem Dreischrittprozeß unter Einsatz eines Nickelkatalysators und optional von Calciumoxid verwendet werden kann. In einem ersten Prozeßschritt erfolgt die eigentliche Methanreformierung bei einer Temperatur von ca. 700°C am heißen Nickelkatalysator, der auf einen keramischen Träger aufgebracht ist, wobei im Fall des zusätzlichen Einsatzes von Calciumoxid dieses zusätzlich Wärme bereitstellt, indem es unter Umwandlung in Calciumcarbonat CO₂ exotherm bindet, d.h. chemisch absorbiert. In einem zweiten Prozeßschritt wird der durch die endotherme Reformierung abgekühlte Nickelkatalysator unter Luftzufuhr oxidiert und dadurch auf eine Temperatur von ca. 850°C aufgeheizt. Gleichzeitig kann gebildetes Calciumcarbonat unter CO₂-Freisetzung wieder in Calciumoxid (CaO) calciniert werden, was dem Desorptionsvorgang des CaO/CaCO₃-Systems entspricht. In einem dritten Prozeßschritt wird durch Methanzufuhr das aufgeheizte Nickeloxid wieder zu metallischem Nickel reduziert, wonach der aufgeheizte Nickelkatalysator wieder zur Verwendung in der Reformierungsreaktion zur Verfügung steht.

Des weiteren ist zur Dampfreformierung von Methan ein sogenannter sorptionsunterstützter Reaktionsprozeß (SERP-Prozeß) bekannt, bei dem die Reformierungsreaktion von Methan in Gegenwart eines Kaliumcarbonat/Hydrotalcit-Systems als CO₂-Adsorbens bei Temperaturen von 300°C bis 500°C und einem Druck von ca. 10 atm abläuft, siehe J.R. Hufton et al., Adsorption-Enhanced Reaction Process for Hydrogen Production, AIChE Journal Band 45 Nr. 2, Seite 248, 1999. Die Regeneration des Adsorbens, welches das CO₂ während der Reformierungsreaktion chemiesorbiert, erfolgt durch eine Druckwechseladsorption (PSA) bzw. eine Erniedrigung des CO₂-Partialdrucks.

Es ist bekannt, durch Pyrolyse kohlenstoffhaltiger Einsatzstoffe und nachfolgende Dampfreformierung Synthesegas, d.h. ein Gas, welches Wasserstoff, Kohlendioxid und Kohlenmonoxid enthält, zu gewinnen, das dann in gewünschter Weise weiterverarbeitet werden kann, z.B. zur Wasserstofferzeugung oder zur Synthese eines anderen Brennstoffs, wie Methanol. Speziell zur Methanolsynthese ist ein Synthesegas mit nur geringem Anteil an inerten Gaskomponenten und mit einem hohen Wasserstoffanteil erforderlich, wobei ein H₂/CO-Verhältnis größer als zwei optimal ist, da dann auf einen Shiftreaktor verzichtet werden kann. Bei der Vergasung von Biomasse entsteht bedingt durch die stöchiometrische Zusammensetzung stets ein Gas mit einem demgegenüber geringeren Wasserstoffgehalt bzw. einem zu hohen Kohlenstoffgehalt in Form von CO₂, so daß dieses aus dem erzeugten Produktgas abgetrennt werden muß.

Bei einem in der Patentschrift DE 197 55 693 C1 beschriebenen Verfahren wird ein organischer Einsatzstoff in einem Pyrolysereaktor umgesetzt und das dadurch gewonnene Produktgas einer Dampfreformierung unterzogen. Als Katalysatoren für die Dampfreformierung werden z.B. Dolomit, Calcit oder ein Nikkelmaterial verwendet. Der Pyrolyserückstand, d.h. Pyrolysekoks, wird zusammen mit einem inerten Wärmeträgermedium einer Feuerung zugeführt und dort unter Aufheizung des Wärmeträgermediums verbrannt. Das dadurch aufgeheizte Wärmeträgermedium wird wieder in den Pyrolysereaktor rückgespeist. Ein ähnliches Verfahren zur Synthesegaserzeugung aus Biomasse, wie es in der Veröffentlichung M.A. Paisley und G. Farris, Development and Commercialization of a Biomass Gasification/ Power Generation System, Proc. 2^{nd} Biomass Conference of the Americas, Portland/Oregon, 1995, Seite 553 beschrieben ist, verwendet zwei getrennte, miteinander gekoppelte zirkulierende Wirbelschichtreaktoren. Im einen Reaktor wird die Biomasse unter Zugabe von Wasserdampf und eines erhitzten inerten Wärmeträgers, wie Sand, in die flüchtigen Komponenten und Pyrolysekoks überführt. Der Pyrolysekoks wird zusammen mit dem Wärmeträger abgetrennt und im anderen Reaktor unter Luftzutritt verbrannt. Der Wärmeträger nimmt die entstehende Wärme auf und wird wieder in den Pyrolyse/Vergasungs-Reaktor rückgeführt.

Als ein weiterer Verfahrensprozeß speziell zur Umsetzung kohlenartiger, fester Einsatzstoffe, insbesondere von Kohle selbst, in ein wasserstoffhaltiges Gas ist deren Vergasung in Anwesenheit von Wasserdampf bekannt. In einer als CO₂-Akzeptorprozeß bekannten Variante der Kohlevergasung wird ein exotherm CO₂-bindendes Absorbermaterial eingesetzt, um durch CO₂-Bindung die nötige Vergasungswärme bereitzustellen und ein Produktgas zu erzeugen, das vor allem Wasserstoff, Kohlenmonoxid und Methan enthält, siehe die Patentschrift US 4.191.540 und den Zeitschriftenaufsatz R. F. Oetman, Stand des OCR/AGA-Kohlevergasungsprogrammes, gas wärme international Band 23 Nr. 8, Seite 301, August 1974.

In der Patentschrift US 4.353.713 ist ein Vergasungsverfahren für einen kohlenstoffhaltigen Einsatzstoff beschrieben, bei dem ein CaO/CaCO₃-System zur Wärmebereitstellung eingesetzt wird. Der Einsatzstoff wird durch Inkontaktbringen mit heißem CaO, z.B. in Form von Dolomit, einer Vergasung unterzogen, wobei die benötigte Wärme durch exotherme Bindung eines Teils des entstehenden CO₂ durch das CaO unter Umwandlung desselben in CaCO₃ bereitgestellt wird. Der verbliebene Rückstand wird dann verbrannt, wobei gleichzeitig CaCO₃ unter CO₂-Freisetzung zu CaO rückgewandelt wird. Das wiedergewonnene CaO wird wieder der Pyrolyse zugeführt. Das Rohproduktgas wird einer Gasreinigungsstufe zugeführt, die unter anderem das noch im Rohproduktgas enthaltene CO₂ abtrennt, das dann wenigstens teilweise wieder zur Pyrolyse- und Reformierungsstufe rückgeführt wird.

Der Erfindung liegt als technisches Problem die Bereitstellung eines Verfahrens und einer Vorrichtung der eingangs genannten Art sowie einer vorteilhaften Verwendung derselben zugrunde, mit denen ein kohlendioxidarmes, wasserstoffreiches Gas oder ein für eine gewünschte Verwendung konditionierties Synthesegas mit relativ geringem Aufwand effektiv aus einem kohlenstoffhaltigen Einsatzstoff durch Pyrolyse und/oder Dampfreformierung erzeugt werden kann.

Die Erfindung löst dieses Problem durch die Bereitstellung eines Verfahrens mit den Merkmalen des Anspruchs 1, einer Vorrichtung mit den Merkmalen des Anspruchs 9 sowie einer Verwendung mit den Merkmalen des Anspruchs 15 oder 16.

Beim Verfahren nach Anspruch 1 erfolgt die Umsetzung des kohlenstoffhaltigen Einsatzstoffs in einem ersten Prozeßschritt in Gegenwart eines exotherm CO₂-bindenden Absorbermaterials mit einer speziellen Prozeßführung derart, daß entstehendes CO₂ entweder vollständig oder aber kontrolliert partiell durch die Wirkung des Absorbermaterials vom erzeugten Produktgas abgetrennt wird. Dadurch steht bereits ausgangs der Pyrolyse und/oder Dampfreformierung ein kohlendioxidarmes, wasserstoffreiches Gas oder ein konditioniertes Synthesegas mit gewünschtem CO₂-Anteil für eine weitere Verwendung zur Verfügung, ohne daß hierzu ein zusätzlicher CO₂-Abtrennprozeß nachgeschaltet werden muß. Mit anderen Worten kann das gewünschte Produktgas in einer "Eintopfreaktion" ohne nachgeschaltete Gasreinigungsprozesse schon am Ausgang der zur Umsetzung des kohlenstoffhaltigen Einsatzstoffs verwendeten Pyrolyse- und/oder Dampfreformierungsreaktoreinheit bereitgestellt werden. In dieser Eintopfreaktion läßt sich die vollständige oder kontrolliert partielle CO₂-Abtrennung bei der Pyrolyse und/oder Dampfreformierung des kohlenstoffhaltigen Einsatzstoffes mit einer Verschiebung des Reaktionsgleichgewichtes der Dampfreformierungs- und der Shiftreaktion und einer Einkopplung der Reaktionswärme aus der exothermen CO₂-Absorption kombinieren. In einem zweiten Prozeßschritt wird das Absorbermaterial durch eine thermische Desorptionsreaktion unter Freisetzung des zuvor gebundenen CO₂ regeneriert, das dadurch vom Produktgas getrennt bleibt und bei Bedarf einer gewünschten Nutzung zugeführt werden kann. Vorzugsweise erfolgt die thermische Desorptionsreaktion durch direkte Beheizung in einem Abgasstrom einer Verbrennung eines kohlenstoffhaltigen Brennstoffes, bei dem es sich insbesondere um den kohlenstoffhaltigen Einsatzstoff handeln kann, oder durch indirekte Beheizung über einen Wärmeübertrager, wobei der letztgenannte Fall besonders zur Bereitstellung von reinem CO₂ geeignet ist.

Vorteilhaft verwendbare, exotherm CO₂-bindende Absorbermaterialien sind im Anspruch 2 angegeben.

Bei einem nach Anspruch 3 weitergebildeten Verfahren beinhaltet der erste Prozeßschritt eine Dampfreformierung mit vollständiger CO₂-Abtrennung durch das Absorbermaterial, wodurch ein im wesentlichen CO₂-freies, wasserstoffreiches Gas als Produktgas bereitgestellt wird. Die Dampfreformierung erfolgt vorzugsweise in einem Temperaturbereich zwischen etwa 200°C und etwa 900°C in einem adiabatischen Reaktor, wobei der Energiebedarf der Dampfreformierung durch die exotherme CO₂-Bindung an das Absorbermaterial aufgebracht wird.

Bei einem nach Anspruch 4 weitergebildeten Verfahren wird das durch die Pyrolyse und/oder die Dampfreformierung gebildete CO₂ in kontrollierter, d.h. steuer- oder regelbarer Weise nur partiell durch das Absorbermaterial gebunden und damit abgetrennt. Die Einstellung der CO₂-Abtrennung erfolgt derart, daß im Produktgas ein bestimmter, gewünschter CO₂-Anteil und damit über die Shiftreaktion auch ein gewünschter CO-Anteil verbleibt, wie er für ein konditioniertes Synthesegas gefordert wird, beispielsweise zur Methanolsynthese.

Bei einem nach Anspruch 5 weitergebildeten Verfahren beinhaltet der erste Prozeßschritt zum einen eine Pyrolyse des kohlenstoffhaltigen Einsatzstoffs und zum anderen eine Dampfreformierung des gebildeten Pyrolyseproduktgases. Mindestens einer der beiden Prozesse läuft in Gegenwart des exotherm CO₂-bindenden Absorbermaterials ab, so daß das gebildete CO₂ vollständig oder kontrolliert partiell abgetrennt werden kann. Die beiden Reaktionsprozesse können hierbei auch gemeinsam in einem einzigen Reaktor ablaufen.

Bei einem nach Anspruch 6 weitergebildeten Verfahren erfolgt die Regeneration des Absorbermaterials im zweiten Prozeßschritt im Rahmen einer Verbrennung von Pyrolysekoks, die in Gegenwart des Absorbermaterials durchgeführt wird. Das Absorbermaterial dient dabei sowohl als chemischer Wärmeerzeuger bei der Pyrolyse und gegebenenfalls auch bei einer zusätzlichen Dampfreformierung wie auch als Wärmeträger zum Transport wenigstens eines Teils der Verbrennungswärme aus der Pyrolysekoksverbrennung zum Pyrolyseprozeß und gegebenenfalls zum Reformierungsprozeß.

Bei einem nach Anspruch 7 weitergebildeten Verfahren wird im ersten Prozeßschritt ein kohlendioxidarmes, wasserstoffreiches Gas erzeugt, das dann einem Methanisierungsprozeß zur CO-Reinigung unterworfen wird. Die CO-Reinigung durch Methanisierung ist im vorliegenden Fall deshalb problemlos möglich, weil das Produktgas keinen für die Methanisierung störenden, zu hohen CO₂-Anteil enthält. Mit dem so weitergebildeten Verfahren kann insbesondere ein ausreichend von Kohlenmonoxid gereinigtes Wasserstoffgas zur Speisung von Brennstoffzellen bereitgestellt werden.

Bei einem nach Anspruch 8 weitergebildeten Verfahren wird im Kaltstartfall Wasser flüssig oder dampfförmig in den Pyrolyse- bzw. Dampfreformierungs-Reaktionsraum injiziert, wodurch das Absorbermaterial unter Bildung von Hydroxiden hydratisiert wird. Durch die zugehörige Hydratisierungsenthalphie kann der Reaktionsraum rasch aufgeheizt und damit auf die zur Durchführung der Pyrolyse bzw. Dampfreformierung erforderliche Temperatur gebracht werden. Das Wasser kann im Überschuß gleichzeitig mit dem kohlenstoffhaltigen Einsatzstoff oder aber vor Zugabe des kohlenstoffhaltigen Einsatzstoffes injiziert werden.

Die Vorrichtung nach Anspruch 9 eignet sich insbesondere zur Durchführung des Verfahrens nach einem der Ansprüche 1 bis 8, indem sie eine entsprechende Pyrolyse- und/oder Dampfreformierungsreaktoreinheit, eine Desorptionseinrichtung und geeignete Prozeßeinstellmittel umfaßt, welche die CO₂-Abtrennung durch das exotherm CO₂-bindende Absorbermaterial so einstellen, daß diese vollständig oder definiert partiell auf einen vorgegebenen CO₂-Konzentrationssollwert erfolgt.

Eine nach Anspruch 10 weitergebildete Vorrichtung umfaßt wenigstens zwei parallele Reaktoreinheiten, die alternierend im Pyrolyse- und/oder Dampfreformierungsbetrieb einerseits und im Desorptionsbetrieb andererseits betrieben werden. Dies ermöglicht eine kontinuierliche Produktgaserzeugung.

Bei einer nach Anspruch 11 weitergebildeten Vorrichtung beinhaltet die Desorptionseinrichtung eine Desorptionsreaktoreinheit und geeignete Mittel, um ihr zu regenerierendes Absorbermaterial von der Pyrolyse- und/oder Dampfreformierungsreaktoreinheit zuzuführen und regeneriertes Absorbermaterial wieder zurückzuspeisen. Auch mit einem solchen Absorbermaterial-Kreislauf läßt sich eine kontinuierliche Produktgaserzeugung realisieren. In einer weiteren Ausgestaltung umfaßt diese Vorrichtung gemäß Anspruch 12 eine Pyrolysereaktoreinheit und eine davon getrennte Dampfreformierungsreaktoreinheit, und die Desorptionsreaktoreinheit ist von einer Pyrolysekoksverbrennungseinheit gebildet. Das Absorbermaterial wird im Kreislauf zwischen der Pyrolysereaktoreinheit und/oder der Dampfreformierungsreaktoreinheit einerseits und der Pyrolysekoksverbrennungseinheit andererseits geführt.

Bei einer nach Anspruch 13 weitergebildeten Vorrichtung sind der Pyrolyse- und/oder Dampfreformierungsreaktoreinheit Mittel zur selektiven Wasserstoffabtrennung zugeordnet, wodurch unmittelbar ein im wesentlichen aus Wasserstoff bestehendes Produktgas erhalten werden kann. Die Wasserstoffabtrennmittel können in die Pyrolyse- und/oder Dampfreformierungsreaktoreinheit integriert oder dieser nachgeschaltet sein. In einer weiteren Ausgestaltung dieser Vorrichtung sind gemäß Anspruch 14 Mittel zur Zuführung des Retentats aus der Wasserstoffabtrennung zur thermischen Desorptionsreaktion vorgesehen, wo das Retentat als Brenngas verwendet werden kann.

Bei einer in Anspruch 15 angegebenen Verwendung wird die erfindungsgemäße Vorrichtung nach einem der Ansprüche 9 bis 14 dazu genutzt, mit dem erzeugten wasserstoffreichen Produktgas ein Brennstoffzellensystem zu speisen. Gleichzeitig wird das Anodenabgas des Brennstoffzellensystems einer Desorptionsreaktoreinheit, in welcher das exotherm CO₂-bindende Absorbermaterial regeneriert wird, als Brenngas zugeführt.

Bei einer in Anspruch 16 angegebenen Verwendung wird eine erfindungsgemäße Vorrichtung nach einem der Ansprüche 9 bis 14 für ein MCFC-Brennstoffzellensystem genutzt, wobei das während der thermischen Desorption des Absorbermaterials freigesetzte CO₂ direkt einer Luftelektrode des Brennstoffzellensystems zugeführt wird. Dadurch kann die ansonsten für MCFC-Brennstoffzellensysteme notwendige CO₂-Rezyklierung entfallen.

Vorteilhafte Ausführungsformen der Erfindung sind in den Zeichnungen dargestellt und werden nachfolgend beschrieben. Hierbei zeigen:
- Fig. 1: ein schematisches Blockdiagramm für die Erzeugung eines im wesentlichen aus Wasserstoff bestehenden, CO₂-freien Gases in einer Eintopfreaktion aus einem kohlenstoffhaltigen Einsatzstoff,
- Fig. 2: ein schematisches Blockdiagramm der Erzeugung eines Synthesegases mit definierter CO₂- und CO-Konzentration in einer Eintopfreaktion aus einem kohlenstoffhaltigen Einsatzstoff mit nachgeschalteter Methanolsynthese,
- Fig. 3: ein schematisches Blockdiagramm einer zur Durchführung der Gaserzeugungsverfahren gemäß den Fig. 1 und 2 geeigneten Vorrichtung mit zwei parallelen, im Wechselbetrieb arbeitenden Reaktoreinheiten,
- Fig. 4: ein schematisches Blockschaltbild einer Vorrichtung entsprechend Fig. 3 zur Wasserstofferzeugung und
- Fig. 5: ein schematisches Blockdiagramm einer zur Durchführung der Gaserzeugungsverfahren gemäß den Fig. 1 und 2 geeigneten Vorrichtung mit Absorbermaterial-Kreislauf.

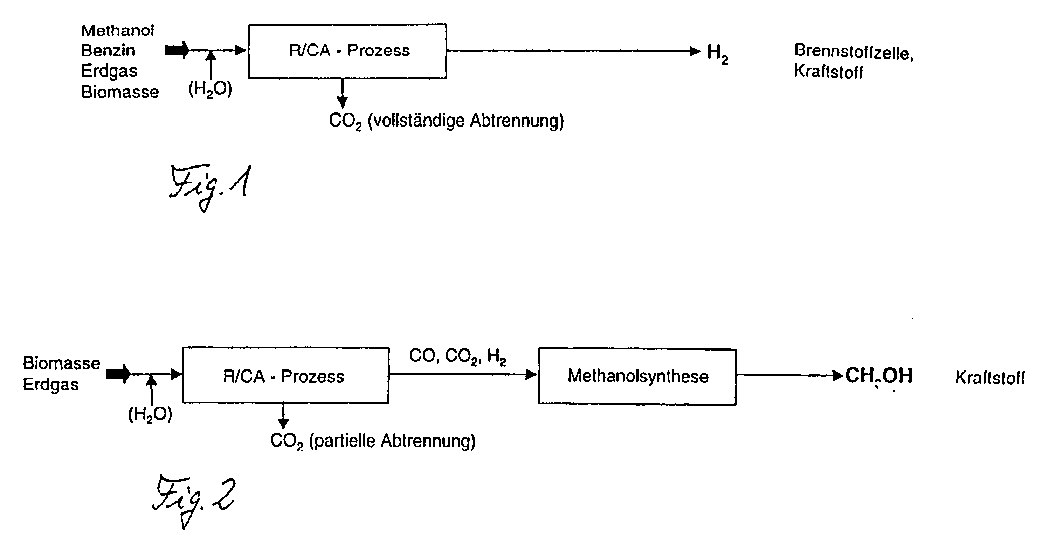

Fig. 1 illustriert eine Anwendung des erfindungsgemäßen Verfahrens, als eine Eintopfreaktion, nachfolgend auch R/CA-Prozeß (Reformierungs- und CO₂-Absorptions-Prozeß) genannt, mit vollständiger CO₂-Abtrennung zur Erzeugung eines im wesentlichen aus Wasserstoff bestehenden Produktgases, das als Brennstoff eines Brennstoffzellensystems oder anderweitig als Kraftstoff verwendet werden kann. Als Einsatzstoff kann, wie angegeben, Methanol, Benzin, Erdgas oder Biomasse, aber auch ein anderer kohlenstoffhaltiger Einsatzstoff dienen. Außer dem kohlenstoffhaltigen Einsatzstoff wird in jeweils benötigter Menge Wasser eingesetzt. Der R/CA-Prozeß beinhaltet charakteristischerweise eine endotherme Dampfreformierung des Einsatzstoffes in Kombination mit einer vollständigen CO₂-Abtrennung durch die Wirkung eines exotherm CO₂-bindenden Absorbermaterials. Als derartiges Absorbermaterial eignen sich insbesondere Metalloxide vom Typ MₓO_{y} oder Metalloxocarbonate vom Typ MₓO_{y}(CO₃)_{z}, wobei M ein Metall bezeichnet, z.B. Mg, Ca, Sr, Ba, La, Mn oder Y, und x, y, und z in üblicher Weise geeignete ganze Zahlen bezeichnen. Weitere geeignete Materialien sind Hydrotalcit sowie weitere komplexe Carbonatverbindungen mit strukturerhaltender Matrix, z.B. vom Typ (M²⁺)ₓ(M³⁺)_{y}(OH)_{z}CO₃*n·H₂O, oder Mischungen der genannten Materialien. Die Absorbermaterialien für den R/CA-Prozeß können zusammen mit geeigneten Reaktionskatalysatoren, z.B. sauerstoff- und hochtemperaturresistenten Katalysatoren wie MgO oder Katalysatoren auf Ni-, Fe-, Zn- oder Cr-Basis, die mit Yttrium-stabilisiertem Zirkonoxid (YSZ) stabilisiert sein können, verwendet werden, z.B. in Form von Mischungen aus Absorber- und Katalysatorpellets oder in Form abwechselnder Bereiche von Absorber- und Katalysatormaterial oder in Form einer direkten Aufbringung des Katalysatormaterials auf das Absorbermaterial.

Der R/CA-Prozeß stellt den ersten Prozeßschritt des Wasserstofferzeugungsverfahrens dar, das als Hauptbestandteil eine Wasserdampfreformierungsreaktion mit gleichzeitiger CO₂-Absorption bei Temperaturen im Bereich von 200°C bis 900°C, insbesondere von ca. 250°C bis 750°C, beinhaltet. Der Energiebedarf der endothermen Dampfreformierung wird durch die exotherme CO₂-Absorption aufgebracht, z.B. im Fall der Verwendung von Calciumoxid als Absorptionsmittel von dessen Carbonatisierung zu CaCO₃. Je nach Einsatzmaterial für die Reformierungsreaktion ist die Enthalpie der Gesamtreaktion im gesamten Temperaturbereich nahezu null oder leicht exotherm, so daß weder eine Beheizung, noch eine Kühlung des Reaktors notwendig ist und folglich ein einfacher adiabatischer Reaktor eingesetzt werden kann. Es versteht sich, daß bei Bedarf zusätzlich zur Reformierung eine exotherme Umsetzung, insbesondere eine partielle Oxidation des Einsatzstoffes unter Sauerstoffzufuhr vorgesehen sein kann, wenn eine autotherme Umsetzung des kohlenstoffhaltigen Einsatzstoffes angestrebt wird. Um den Reaktionsraum im Kaltstartfall rasch auf Betriebstemperatur zu bringen, kann dem Reaktionsraum auch direkt Wasser zugegeben werden, wobei in diesem Fall eine Hydratisierung des Absorbermaterials unter Bildung von Hydoxiden stattfindet, so daß die zugehörige Hydratisierungsenthalpie zur raschen Aufheizung des Reaktionsraums verwendet werden kann.

In einem zweiten Prozeßschritt wird dann das eingesetzte Absorbermaterial periodisch wieder durch thermische Desorption regeneriert, beispielsweise das genannte CaCO₃ durch Calcinierung wieder in CaO umgewandelt, wobei das zuvor gebundene CO₂ wieder freigesetzt wird. Die Desorptionstemperatur liegt in Abhängigkeit vom verwendeten Absorbermaterial typischerweise im Bereich zwischen 300°C und 1200°C. Das CO₂-haltige Abgas aus der Desorptionsreaktion kann einer geeigneten Verwendung zugeführt werden, z.B. zur Speisung einer Luftelektrode eines Brennstoffzellensystems vom MCFC-Typ, d.h. mit Alkalicarbonat-Schmelzelektrolyt, wodurch eine ansonsten für dieses System vorgesehene CO₂-Rezyklierung entfallen kann. Im Fall von Brennstoffzellenanwendungen kann zudem vorgesehen sein, das Brennstoffzellenanodenabgas als Brenngas für die thermische Desorption des Absorbermaterials einzusetzen. Wenn das im R/CA-Prozeß erzeugte Produktgas einer selektiven Wasserstoffabtrennung z.B. über eine integrierte oder nachgeschaltete Pd-Wasserstoffabtrennmembran unterzogen wird, kann auch das Retentat dieser Wasserstoffabtrennung als Brenngas für die thermische Desorption des Absorbermaterials genutzt werden. Eine Integration der Wasserstoffabtrennmembran in die den R/CA-Prozeß durchführende Reaktoreinheit ermöglicht eine zusätzliche Verschiebung des Reaktionsgleichgewichtes zugunsten des zu erzeugenden Wasserstoffs.

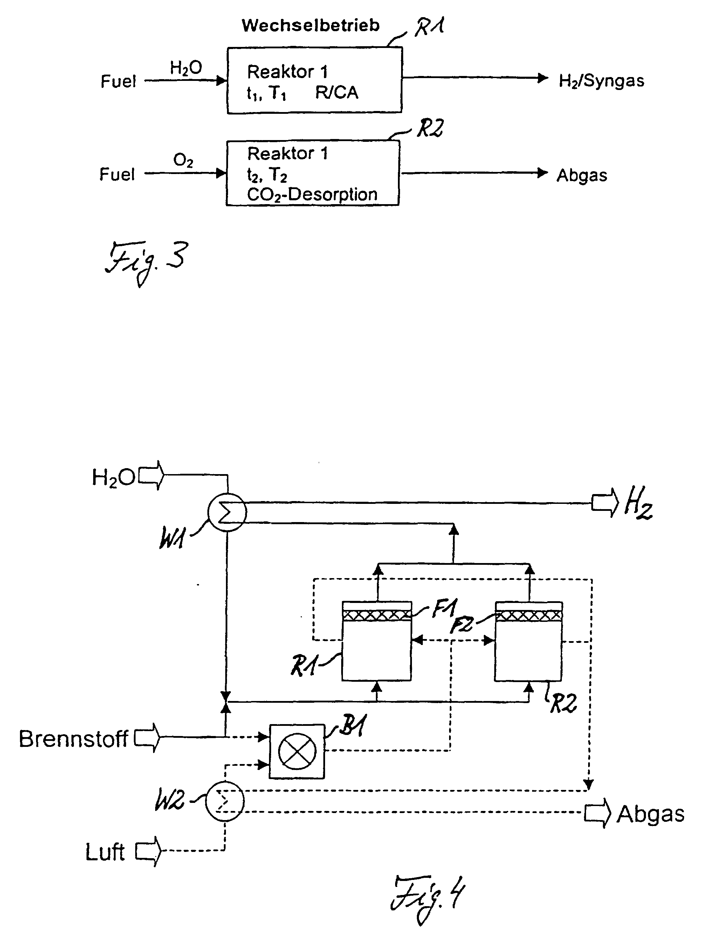

Fig. 2 illustriert eine weitere Anwendung des R/CA-Prozesses, und zwar zur Erzeugung eines konditionierten Synthesegases aus Biomasse, Erdgas oder einem anderen geeigneten kohlenstoffhaltigen Einsatzstoff. In diesem Fall wird durch entsprechende Einstellung der Prozeßparameter insbesondere dafür gesorgt, daß nicht das gesamte entstehende CO₂ in der zugehörigen Umsetzungsreaktoreinheit durch das exotherm CO₂bindende Absorbermaterial abgetrennt wird, sondern ein bestimmter, definierter CO₂-Anteil im Produktgas verbleibt, das somit ein konditioniertes Synthesegas darstellt, das hauptsächlich aus Kohlenmonoxid, Kohlendioxid und Wasserstoff besteht. Im gezeigten Beispiel wird die Zusammensetzung des Synthesegases so eingestellt, daß sie für eine anschließend durchgeführte Synthese von Methanol optimal ist, das dann z.B. als Kraftstoff genutzt werden kann. Die im Vergleich zum Verfahren von Fig. 1 nur partielle CO₂-Abtrennung und vermehrte CO-Bildung wird insbesondere dadurch bewirkt, daß nur eine geringere Menge des Absorbermaterials eingesetzt und dem Umsetzungsreaktor gegebenenfalls zusätzlich Wärme zugeführt wird. Speziell läßt sich durch entsprechende Prozeßsteuerung ein für die Methanolsynthese optimales H₂/CO-Verhältnis einstellen.

In beiden gezeigten Verfahrensbeispielen kann im Umsetzungsreaktor für den R/CA-Prozeß bei Bedarf ein geeignetes Temperaturprofil eingestellt werden, z.B. eine höhere Eintrittstemperatur mit der Folge eines hohen Umsatzes an zugeführtem Einsatzstoff bei relativ geringer CO₂-Absorption und eine niedrigere Austrittstemperatur mit höherer CO₂-Absorption, wobei aus kinetischen Gründen die Absorptionstemperatur ca. 150°C unterhalb der Gleichgewichtstemperatur gewählt werden kann.

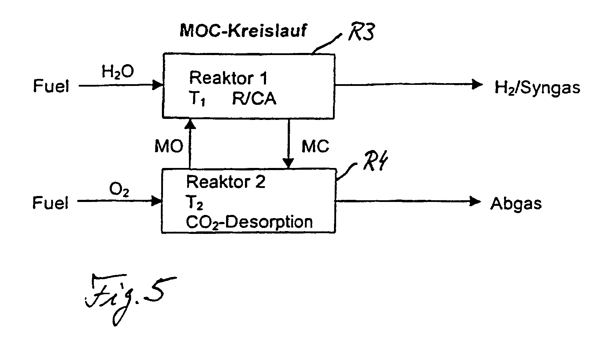

Verfahrenstechnisch sind zwei Varianten für die Erzeugung des gewünschten Prozeßgases und die erforderliche Regenerierung des Absorbermaterials möglich. Eine erste Variante stellt der sogenannte Wechselbetrieb dar, wie er in Fig. 3 veranschaulicht ist. Hierzu werden zwei gleichartige Reaktoreinheiten R1, R2 parallel verwendet, in denen das Absorbermaterial z.B. in einem Festbett fixiert bleibt und die alternierend im Reformierungsbetrieb und Desorptionsbetrieb gefahren werden. Der jeweils im Reformierungsbetrieb arbeitende, den R/CA-Prozeß durchführende Reaktor R1 wird mit dem Einsatzstoff und Wasser gespeist und auf einer geeigneten Reformierungstemperatur T₁ gehalten, um für eine gewisse Zeitdauer t₁ die Reformierung des Einsatzstoffs unter vollständiger oder kontrolliert partieller CO₂-Abtrennung durch das Absorbermaterial durchzuführen. Der jeweils andere Reaktor R2 wird mit einem Brennstoff, z.B. dem auch zur Reformierung verwendeten Einsatzstoff, und Sauerstoff, z.B. aus einem Luftstrom, gespeist. Durch die Verbrennung des Brennstoffs wird der Reaktor R2 auf eine ausreichend hohe Desorptionstemperatur T₂ gebracht, so daß für eine gewisse Zeitspanne t₂ das im vorangegangenen Reformierungsbetrieb gebundene CO₂ unter Rückwandlung des Absorbermaterials wieder freigesetzt wird. Sobald diese CO₂-Desorption beendet ist, steht die Reaktoreinheit R2 wieder für den R/CA-Prozeß zur Verfügung.

Durch die im wesentlichen vollständige CO₂-Abtrennung schon im Rahmen des R/CA-Prozesses eignet sich das dadurch gelieferte Produktgas bei Bedarf auch für eine direkte CO-Reinigung mittels Methanisierung, ohne daß dieser eine separate CO₂-Abtrennstufe vorgeschaltet werden muß. Damit kann beispielsweise den Brennstoffzellen eines Brennstoffzellensystems ein im wesentlichen aus Wasserstoff bestehendes Brenngas zur Verfügung gestellt werden, das ausreichend von störendem Kohlenmonoxid gereinigt ist. Die Methanisierung läuft hierbei ohne Behinderung durch einen zu hohen CO₂-Anteil im Produktgas ab, da das Produktgas bereits inhärent im wesentlichen von CO₂ frei ist.

Eine etwas detailliertere Systemauslegung für diesen Wechselbetrieb ist in Fig. 4 für den Fall der Wasserstofferzeugung dargestellt. Dabei ist der Reformierungsreaktionspfad mit Reaktortemperaturen von typischerweise bis etwa 750°C mit durchgezogenen Linien und der Absorbermaterial-Regenerationspfad mit Reaktortemperaturen von typischerweise etwa 1000°C mit gestrichelten Linien symbolisiert. Wie aus Fig. 4 ersichtlich, werden der zugeführte Einsatzstoff (Brennstoff) über einen nicht gezeigten Wärmeübertrager sowie das Reaktionswasser ebenfalls über einen Wärmeübertrager W1 vorgeheizt und dem jeweils reformierenden Reaktor zugeführt. Bei Einsatz von CaO als Absorbermaterial entsteht im reformierenden Reaktor CaCO₃, das anschließend in einem Abgasstrom bei ca. 1000°C regeneriert wird. Zur Bereitstellung dieses heißen Abgasstroms wird der Brennstoff mit Luft, die über einen weiteren Wärmeübertrager W2 vorgeheizt wird, in einem Brenner B1 verbrannt. Nach Aufheizung des jeweils im Desorptionsbetrieb gefahrenen Reaktors wird das Verbrennungsabgas über den lufterhitzenden Wärmeübertrager W2 abgeführt. Der im reformierenden Reaktor in einer Eintopfreaktion erzeugte Wasserstoff wird über den wassererhitzenden Wärmeübertrager W1 geleitet und dann der gewünschten Nutzung zugeführt. Es versteht sich, daß bei Verwendung anderer Absorbermaterialien die genannten Reaktortemperaturen gegebenenfalls geeignet zu modifizieren sind. Die beiden Reaktoren R1, R2 beinhalten je ein Feinfilter F1, F2 zur Abtrennung des erzeugten Produktgases vom Absorbermaterial. Bei Bedarf kann dieses Filter F1, F2 durch eine Wasserstoffabtrennmembran ersetzt werden, um dem Reaktionsgleichgewicht neben CO₂ auch Wasserstoff zu entziehen und es damit praktisch vollständig zur Produktseite hin zu verschieben. Alternativ kann eine Wasserstoffabtrennstufe den beiden Reaktoren R1, R2 nachgeschaltet sein. Das Retentat der Wasserstoffabtrennung kann wieder in die Reaktoren R1, R2 zurückgeführt oder aber im Brenner B1 genutzt werden.

Als Alternative des erläuterten Wechselbetriebs mit wenigstens zwei parallelen, gleichartigen Reaktoreinheiten kann ein Wechselbetrieb einer einzigen Reaktoreinheit vorgesehen sein, wenn auf eine kontinuierliche Produktgaserzeugung verzichtet werden kann. Bei dieser Vorgehensweise kann dann ein geeigneter Zwischenspeicher für erzeugtes Produktgas oder eine elektrische Zwischenspeicherung der erzeugten Energie in Form einer Batterie eingesetzt werden, um die Zeiträume zu überbrücken, in welchen die Reaktoreinheit im Desorptionsbetrieb gefahren wird.

Als zweite Variante kann die Produktgaserzeugung und Absorbermaterialregenerierung mit Hilfe eines Absorbermaterial-Kreislaufs kontinuierlich erfolgen. Dies ist in Fig. 5 illustriert. Hierbei werden zwei unterschiedliche Reaktoreinheiten R3, R4 verwendet, von denen die eine speziell zur Durchführung des R/CA-Prozesses und die andere speziell zur Durchführung der CO₂-Desorption ausgelegt sind, d.h. jede der beiden Reaktoreinheiten R3, R4 wird mit gleichbleibender Funktion und somit im allgemeinen gleichbleibenden Prozeßparametern betrieben. So wird der in Fig. 5 obere Reaktor R3 stets mit dem zu reformierenden Einsatzstoff und Wasser gespeist und im Reformierungsbetrieb gefahren, während der in Fig. 5 untere Reaktor R4 mit Brennstoff und Sauerstoff gespeist und im Desorptionsbetrieb gefahren wird. Im Gegensatz zur Anordnung von Fig. 3 ist das Absorbermaterial im Beispiel von Fig. 5 nicht in den Reaktoreinheiten R3, R4 fixiert, sondern kann durch entsprechende herkömmliche Mittel zwischen den beiden Reaktoreinheiten R3, R4 im Kreislauf transportiert werden. Nicht mehr weiter CO₂-aufnahmefähiges Absorbermaterial, z.B. in Metallcarbonatform (MC), wird vom reformierenden Reaktor R3 zum Desorptionsreaktor R4 transportiert, während umgekehrt im Desorptionsreaktor R4 von CO₂-befreites Absorbermaterial, z.B. in Metalloxidform (MO), wieder in den Reformierungsreaktor R3 rückgespeist wird.

Bei allen oben erläuterten Verfahrensvarianten kann die thermische Desorption bei Bedarf nicht nur, wie angegeben, durch direkte Beheizung des zu regenerierenden Absorbermaterials in einem heißen Verbrennungsabgas erfolgen, sondern alternativ auch durch eine indirekte Beheizung unter Einsatz eines entsprechenden Wärmeübertragers. In diesem Fall wird das frei werdende CO₂ nicht mit dem aufheizenden Abgas vermengt, sondern bleibt davon getrennt, so daß sich diese Prozeßführung der thermischen Desorption besonders dafür eignet, reines CO₂ als ein Nebenprodukt zu gewinnen.

Anstelle der Reformierungsreaktion oder aber vorzugsweise dieser vorgeschaltet kann das erfindungsgemäße Verfahren auch eine Pyrolysereaktion mit integrierter vollständiger bzw. kontrolliert partieller CO₂-Abtrennung umfassen, insbesondere zur Erzeugung eines kohlendioxidarmen, wasserstoffreichen Gases oder eines konditionierten Synthesegases durch Biomassevergasung. Dazu kann irgendeines der eingangs erwähnten herkömmlichen Pyrolyseverfahren entsprechend modifiziert werden. Diese Modifikation umfaßt das Einbringen von exotherm CO₂bindendem Absorbermaterial in einer Menge bzw. einem Materialfluß, die/der geeignet ist, die gewünschte vollständige oder kontrolliert partielle CO₂-Abtrennung zu bewirken. Eine der Pyrolyse und gegebenenfalls der damit kombinierten Dampfreformierung nachgeschaltete, separate herkömmliche CO₂-Abtrennung kann entfallen.

Speziell eignet sich das erfindungsgemäße Verfahren zur Implementierung in eine Anlage zur Biomassevergasung, bei welcher der organische Einsatzstoff in einer zugehörigen Pyrolysereaktoreinheit einer Pyrolyse unterzogen, das entstehende Pyrolysegas in einer integrierten oder separaten Dampfreformierungsreaktoreinheit einer Dampfreformierung unterzogen und der Pyrolysekoks in einer Pyrolysekoksverbrennungseinheit verbrannt wird, um die entstehende Verbrennungswärme für die Dampfreformierung zu nutzen. In ein solches System wird nun das exotherm CO₂-bindende Absorbermaterial z.B. unter teilweisem Ersatz eines herkömmlicherweise verwendeten Wärmeträgers eingesetzt. Die Regeneration des Absorbermaterials erfolgt vorzugsweise in der Pyrolysekoksverbrennungseinheit, so daß kein separater Desorptionsreaktor erforderlich ist. Regeneriertes Absorbermaterial wird in die Pyrolysereaktoreinheit und/oder die Dampfreformierungsreaktoreinheit eingespeist. Während der Pyrolyse, z.B. bei einem Temperaturniveau von je nach Einsatzmaterial ca. 500°C, nimmt das Absorbermaterial gebildetes CO₂ unter Abgabe der exothermen Reaktionswärme auf, während es nach Einbringen in die Feuerung der Pyrolysekoksverbrennungseinheit das zuvor aufgenommene CO₂ bei Temperaturen von z.B. etwa 1000°C wieder abspaltet. Je nach Anteil von Absorbermaterial einerseits und anderem, festem, inertem Wärmeträgermaterial wird die Feuerungswärme der Pyrolysekoksverbrennungseinheit als fühlbare Wärme und als "chemische Wärme" in die Pyrolyse- bzw. Reformierungsreaktoreinheit eingetragen. In der Dampfreformierungsreaktoreinheit bewirkt die direkte CO₂-Abtrennung eine entsprechende Verschiebung des Reformierungsgleichgewichtes zugunsten des Produktgases. Auch bei dieser Systemauslegung kann ein gewünschtes Temperaturprofil für den Pyrolysereaktor bzw. den kombinierten Pyrolyse- und Dampfreformierungsreaktor eingestellt werden, z.B. eine gegenüber der Eintrittstemperatur niedrigere Austrittstemperatur. In der Dampfreformierungsreaktoreinheit kann zudem bei der Pyrolysegasreformierung auch eine katalytische Teercrackung, z.B. an Dolomit, erfolgen. Es sei angemerkt, daß neben dem Einbringen des Absorbermaterials in geeigneter Menge und der Einstellung entsprechender Prozeßbedingungen zur Gewährleistung der damit erzielbaren, integrierten chemischen CO₂-Absorption keine weiteren nennenswerten Modifikationen der bekannten Pyrolysesysteme bzw. kombinierten Pyrolyse-/Reformierungssysteme zur Implementierung der vorliegenden Erfindung erforderlich sind.

Wie sich aus der obigen Beschreibung einiger Ausführungsformen der Erfindung ergibt, lassen sich mit dem erfindungsgemäßen Verfahren und der erfindungsgemäßen Vorrichtung zahlreiche Vorteile erzielen, insbesondere in der Realisierung als reiner Reformierungsprozeß (R/CA-Prozeß) oder als kombinierter Pyrolyse- und Reformierungsprozeß (PR/CA-Prozeß), jeweils mit integrierter CO₂-Absorption durch das eingesetzte, chemisch exotherm CO₂-bindende Absorbermaterial dergestalt, daß das fertige, gewünschte Produktgas, d.h. ein ausreichend kohlendioxidarmes, wasserstoffreiches Gas oder ein konditioniertes Synthesegas, direkt in einer Eintopfreaktion am Ausgang der Pyrolyse- bzw. Reformerstufe bereitsteht. Die Erfindung ist besonders auch für Reformierungsprozesse in mobilen Anwendung geeignet und erlaubt unter anderem ein schnelles Aufheizen des R/CA-Reaktors beim Kaltstart, was besonders im Fahrzeugbetrieb von Bedeutung ist. Dies läßt sich durch eine Wasserinjektion in den Reaktor erreichen, die aufgrund der exothermen Hydratisierungsenthalpie des Absorbermaterials dafür sorgt, daß der Reaktor rasch seine normale Reformierungsbetriebstemperatur erreicht. Gut eignet sich die Erfindung auch für den stationären Einsatz zur Wasserstoff- bzw. Brenngaserzeugung für die Strom-/Wärmeerzeugung in Gasmotor- oder Brennstoffzellen-Blockheizkraftwerken. Ein weiterer Vorteil der Erfindung besteht darin, daß viele der CO₂-Absorbermaterialien gleichzeitig katalytische Eigenschaften bezüglich der Shiftreaktion zeigen, z.B. Dolomit, und bei Verwendung von basischem Metalloxid/-carbonat als Absorbermaterial Sauergase, wie schwefelhaltige Gase etc., aus dem Rohgas entfernt werden.

## Patentansprüche

1. Verfahren zur Erzeugung eines kohlendioxidarmen, wasserstoffreichen Gases oder eines konditionierten Synthesegases aus einem kohlenstoffhaltigen Einsatzstoff unter Anwendung einer Pyrolyseund/oder Dampfreformierungsreaktion,
**dadurch gekennzeichnet, dass**
es als zweischrittiges Verfahren ausgelegt ist, bei dem
- in einem ersten Prozessschritt die Pyrolyse und/oder Dampfreformierung des kohlenstoffhaltigen Einsatzstoffs in Gegenwart eines exotherm CO₂-bindenden Absorbermaterials derart durchgeführt wird, dass gebildetes Kohlendioxid vollständig oder kontrolliert partiell durch das Absorbermaterial vom erzeugten Produktgas abgetrennt wird, das dadurch als kohlendioxidarmes, wasserstoffreiches Gas oder konditioniertes Synthesegas bereitsteht, und
- in einem zweiten Prozessschritt das Absorbermaterial periodisch durch eine thermische Desorptionsreaktion bei einer gegenüber dem ersten Prozessschritt höheren Temperatur unter CO₂-Freisetzung regeneriert wird,
- wobei in einer oder mehreren gleichartigen Reaktoreinheiten alternierend der erste Prozessschritt und der zweite Prozessschritt durchgeführt werden oder der erste Prozessschritt in einer ersten Reaktoreinheit und der zweite Prozessschritt in einer zweiten Reaktoreinheit durchgeführt werden, die unter Bildung eines Absorbermaterial-Kreislaufs miteinander gekoppelt sind.

2. Verfahren nach Anspruch 1, weiter **dadurch gekennzeichnet, daß** als Absorbermaterial ein Metalloxid vom Typ MₓO_{y} oder Metalloxocarbonat vom Typ MₓO_{y}(CO₃)_{z}, wobei M Mg, Ca, Sr, Ba, La, Mn oder Y bezeichnet und x, y, und z ganze Zahlen bezeichnen, oder Hydrotalcit oder eine komplexe Carbonatverbindung mit strukturerhaltender Matrix vom Typ (M²⁺)ₓ(M³⁺)_{y}(OH)_{z}CO₃*n·H₂O oder eine Mischung der genannten Materialien verwendet wird.

3. Verfahren nach Anspruch 1 oder 2, weiter **dadurch gekennzeichnet, daß** der erste Prozeßschritt eine Dampfreformierung mit einer Temperatur von etwa 200°C bis etwa 900°C mit im wesentlichen vollständiger CO₂-Abtrennung durch das Absorbermaterial zur Erzeugung eines im wesentlichen CO₂-freien, wasserstoffreichen Gases beinhaltet.

4. Verfahren nach Anspruch 1 oder 2, weiter **dadurch gekennzeichnet, daß** der erste Prozeßschritt eine kontrollierte partielle CO₂-Abtrennung durch das Absorbermaterial zur Erzeugung eines konditionierten Synthesegases mit einem vorgegebenen, für eine anschließende Synthesereaktion passenden CO₂-Anteil beinhaltet.

5. Verfahren nach einem der Ansprüche 1 bis 4, weiter **dadurch gekennzeichnet, daß** der erste Prozeßschritt eine Pyrolyse des kohlenstoffhaltigen Einsatzstoffes und eine Dampfreformierung des Pyrolyseproduktgases beinhaltet, wobei die Pyrolyse und/oder die Dampfreformierung in Gegenwart des exotherm CO₂-bindenden Absorbermaterials erfolgen.

6. Verfahren nach einem der Ansprüche 1 bis 5, weiter **dadurch gekennzeichnet, daß** im ersten Prozeßschritt eine Pyrolyse des kohlenstoffhaltigen Einsatzstoffes in Gegenwart des exotherm CO₂-bindenden Aborbermaterials erfolgt und der zweite Prozeßschritt eine Pyrolysekoksverbrennung beinhaltet.

7. Verfahren nach einem der Ansprüche 1 bis 6, weiter **dadurch gekennzeichnet, daß** im ersten Prozeßschritt ein kohlendioxidarmes, wasserstoffreiches Gas erzeugt und dieses anschließend einem Methanisierungsprozeß zur CO-Reinigung unterworfen wird.

8. Verfahren nach einem der Ansprüche 1 bis 7, weiter **dadurch gekennzeichnet, daß** bei einem Kaltstart Wasser im Überschuß oder vor Zugabe des kohlenstoffhaltigen Einsatzstoffs in einen das CO₂-bindende Absorbermaterial enthaltenden Pyrolyse- und/oder Dampfreformierungs-Reaktionsraum injiziert wird, bis der Reaktionsraum seine Betriebstemperatur erreicht.

9. Vorrichtung zur Erzeugung eines kohlendioxidarmen, wasserstoffreichen Gases oder eines konditionierten Synthesegases aus einem kohlenstoffhaltigen Einsatzstoff unter Anwendung einer Pyrolyse- und/oder Dampfreformierungsreaktion, insbesondere zur Durchführung des Verfahrens nach einem der Ansprüche 1 bis 8,
**gekennzeichnet durch**
einen Aufbau aus
- wenigstens einer Pyrolyse- und/oder Dampfreformierungsreaktoreinheit zur Pyrolyse und/oder Dampfreformierung des Einsatzstoffes in Gegenwart eines exotherm CO₂-bindenden, Kohlendioxid vollständig oder kontrolliert partiell aus dem erzeugten Produktgas abtrennenden Absorbermaterials und
- einer Einrichtung zur periodischen thermischen Desorption des Absorbermaterials bei einer gegenüber der Pyrolyse und/oder Dampfreformierung höheren Temperatur unter CO₂-Freisetzung,
- wobei die Desorptionseinrichtung mit der Pyrolyse- und/oder Dampfreformierungsreaktoreinheit in einer gemeinsamen Reaktoreinheit integriert ist, die abwechselnd im Pyrolyse-/Dampfreformierungsbetrieb und im Desorptionsbetrieb betrieben wird, oder die Pyrolyseund/oder Dampfreformierungsreaktoreinheit von einer ersten Reaktoreinheit und die Desorptionseinrichtung von einer zweiten Reaktoreinheit gebildet sind, die mit der ersten Reaktoreinheit unter Bildung eines Absorbermaterial-Kreislaufs gekoppelt ist.

10. Vorrichtung nach Anspruch 9, weiter **dadurch gekennzeichnet, daß** zwei parallele Reaktoreinheiten (R1, R2) vorgesehen sind, von denen alternierend die eine im Pyrolyseund/oder Dampfreformierungsbetrieb und die andere im Desorptionsbetrieb arbeitet, in welchem durch die Desorptionseinrichtung die thermische Desorption des Absorbermaterials durchgeführt wird.

11. Vorrichtung nach Anspruch 9, weiter **dadurch gekennzeichnet, daß** die Desorptionseinrichtung eine Desorptionsreaktoreinheit (R4), Mittel zur Zuführung von zu regenerierendem Absorbermaterial von der Pyrolyse- und/oder Dampfreformierungsreaktoreinheit (R3) zur Desorptionsreaktoreinheit und Mittel zur Zuführung von regeneriertem Absorbermaterial zur Pyrolyse- und/oder Dampfreformierungsreaktoreinheit umfaßt.

12. Vorrichtung nach Anspruch 11, weiter **dadurch gekennzeichnet, daß** eine Pyrolysereaktoreinheit und eine in diese integrierte oder an diese angekoppelte Dampfreformierungsreaktoreinheit sowie eine die Desorptionsreaktoreinheit bildende Pyrolysekoksverbrennungseinheit vorgesehen sind, der zu regenerierendes Absorbermaterial aus der Pyrolysereaktoreinheit und/oder der Dampfreformierungsreaktoreinheit zugeführt und aus der regeneriertes Absorbermaterial zur Pyrolysereaktoreinheit und/oder zur Dampfreformierungsreaktoreinheit rückgeführt wird.

13. Vorrichtung nach einem der Ansprüche 9 bis 12, weiter **gekennzeichnet durch** Mittel zur selektiven Wasserstoffabtrennung, die der Pyrolyse- und/oder Dampfreformierungsreaktoreinheit zugeordnet sind.

14. Vorrichtung nach Anspruch 13, weiter **gekennzeichnet durch** Mittel zur Zuführung des Retentats der selektiven Wasserstoffabtrennung als Brenngas zur thermischen Desorption des Absorbermaterials.

15. Verwendung einer Vorrichtung nach einem der Ansprüche 9 bis 14 zur Speisung eines Brennstoffzellensystems mit erzeugtem kohlendioxidarmem, wasserstoffreichem Gas, wobei das Anodenabgas des Brennstoffzellensystems als Brenngas zur thermischen Desorption des Absorbermaterials dient.

16. Verwendung einer Vorrichtung nach einem der Ansprüche 9 bis 14 für ein MCFC-Brennstoffzellensystem, wobei von der Desorptionseinrichtung aus dem Absorbermaterial freigesetztes Kohlendioxid einer Luftelektrode des Brennstoffzellensystems zugeführt wird.

## Claims

1. Process for producing a carbon-dioxide-poor, hydrogen-rich gas or a conditioned synthesis gas from a carbon-containing feedstock using a pyrolysis and/or vapour reformation reaction,
**characterised in that**
it is arranged as a two-step process, wherein
- in a first process step, the pyrolysis and/or vapour reformation of the carbon-containing feedstock is carried out in the presence of an exothermally CO₂-binding absorber material in such a manner that carbon dioxide formed is separated from the product gas produced completely or, in a controlled manner, partially by the absorber material, which product gas is thereby provided as a carbon-dioxide-poor, hydrogen-rich gas or conditioned synthesis gas, and
- in a second process step, the absorber material is regenerated periodically by a thermal desorption reaction at a higher temperature relative to the first process step with CO₂ being released,
- wherein, in one or more identical reactor units, the first process step and the second process step are carried out alternately, or the first process step is carried out in a first reactor unit and the second process step is carried out in a second reactor unit which are connected to each other with an absorber material circuit being formed.

2. Process according to claim 1, further **characterised in that** a metal oxide of the MₓO_{y} type or metal oxycarbonate of the MₓO_{y}(CO₃)_{z} type, M denoting Mg, Ca, Sr, Ba, La, Mn or Y and x, y and z denoting whole numbers, or hydrotalcite or a complex carbonate compound having a structure-forming matrix of the (M²⁺)ₓ(M³⁺)_{y}(OH)_{z}CO₃*n·H₂O type or a mixture of the materials mentioned, is used as the absorber material.

3. Process according to claim 1 or 2, further **characterised in that** the first process step comprises vapour reformation at a temperature of from approximately 200°C to approximately 900°C with substantially complete CO₂ separation by means of the absorber material in order to produce a substantially CO₂-free, hydrogen-rich gas.

4. Process according to claim 1 or 2, further **characterised in that** the first process step comprises a controlled partial CO₂-separation by means of the absorber material in order to produce a conditioned synthesis gas having a predetermined CO₂ component which is suitable for a subsequent synthesis reaction.

5. Process according to any one of claims 1 to 4, further **characterised in that** the first process step comprises pyrolysis of the carbon-containing feedstock and vapour reformation of the pyrolysis product gas, the pyrolysis and/or vapour reformation being effected in the presence of the exothermally CO₂-binding absorber material.

6. Process according to any one of claims 1 to 5, further **characterised in that**, in the first process step, pyrolysis of the carbon-containing feedstock is effected in the presence of the exothermally CO₂-binding absorber material and the second process step comprises pyrolysis coke combustion.

7. Process according to any one of claims 1 to 6, further **characterised in that**, in the first process step, a carbon-dioxide-poor, hydrogen-rich gas is produced and is subsequently subjected to a methanation process for CO removal.

8. Process according to any one of claims 1 to 7, further **characterised in that**, in the case of a cold start, water in excess is injected into a pyrolysis and/or vapour reformation reaction chamber, which contains the CO₂-binding absorber material, or before the addition of the carbon-containing feedstock until the reaction chamber reaches its operating temperature.

9. Apparatus for producing a carbon-dioxide-poor, hydrogen-rich gas or a conditioned synthesis gas from a carbon-containing feedstock using a pyrolysis and/or vapour reformation reaction, in particular to carry out the process according to any one of claims 1 to 8,
**characterised by**
a structure comprising
- at least a pyrolysis and/or vapour reformation reactor unit for the pyrolysis and/or vapour reformation of the feedstock in the presence of an exothermally CO₂-binding absorber material which separates carbon dioxide completely or, in a controlled manner, partially from the product gas produced, and
- a device for the periodic thermal desorption of the absorber material at a higher temperature relative to the pyrolysis and/or vapour reformation with CO₂ being released,
- the desorption device being integrated with the pyrolysis and/or vapour reformation reactor unit in a common reactor unit which is operated alternately in pyrolysis/vapour reformation operation and in desorption operation, or the pyrolysis and/or vapour reformation reactor unit is constituted by a first reactor unit and the desorption device is constituted by a second reactor unit which is connected to the first reactor unit with an absorber material circuit being formed.

10. Apparatus according to claim 9, further **characterised in that** two parallel reactor units (R1, R2) are provided, one of which functions alternately in pyrolysis and/or vapour reformation operation and the other in desorption operation, in which the thermal desorption of the absorber material is carried out by the desorption device.

11. Apparatus according to claim 9, further **characterised in that** the desorption device comprises a desorption reactor unit (R4), means for supplying absorber material to be regenerated from the pyrolysis and/or vapour reformation reactor unit (R3) to the desorption reactor unit and means for supplying regenerated absorber material to the pyrolysis and/or vapour reformation reactor unit.

12. Apparatus according to claim 11, further **characterised in that** a pyrolysis reactor unit and a vapour reformation reactor unit, which is integrated therein or connected thereto, and a pyrolysis coke combustion unit which forms the desorption reactor unit are provided, to which absorber material to be regenerated is supplied from the pyrolysis reactor unit and/or the vapour reformation reactor unit and from which regenerated absorber material is supplied back to the pyrolysis reactor unit and/or to the vapour reformation reactor unit.

13. Apparatus according to any one of claims 9 to 12, further **characterised by** means for selective hydrogen separation, which means are associated with the pyrolysis and/or vapour reformation reactor unit.

14. Apparatus according to claim 13, further **characterised by** means for supplying the retentate of the selective hydrogen separation as a combustion gas to the thermal desorption of the absorber material.

15. Use of apparatus according to any one of claims 9 to 14 in order to supply a fuel cell system with produced carbon-dioxide-poor, hydrogen-rich gas, the anode discharge gas of the fuel cell system being used as the combustion gas for the thermal desorption of the absorber material.

16. Use of apparatus according to any one of claims 9 to 14 for an MCFC fuel cell system, carbon dioxide which is released from the absorber material by the desorption device being supplied to an air electrode of the fuel cell system.

## Revendications

1. Procédé de génération d'un gaz riche en hydrogène et à faible teneur en dioxyde de carbone ou d'un gaz de synthèse conditionné à partir d'une substance mise en oeuvre ou charge contenant du carbone, en appliquant une réaction de pyrolyse et/ou une réaction de reformage à la vapeur,
**caractérisé en ce que**
il est exécuté en tant que procédé en deux étapes, dans lequel
- dans une première étape de procédé, on réalise la pyrolyse et/ou le reformage à la vapeur de la charge contenant du carbone en présence d'un matériau absorbant liant CO₂ de façon exothermique de façon telle que le dioxyde de carbone formé est séparé par le matériau absorbant du produit gazeux généré, entièrement ou partiellement et de façon contrôlée, le produit gazeux étant mis à disposition en tant que gaz riche en hydrogène et à faible teneur en dioxyde de carbone ou en tant que gaz de synthèse conditionné, et
- dans une seconde étape de procédé, le matériau absorbant est périodiquement régénéré par une réaction de désorption thermique, à une température supérieure à celle de la première étape de procédé, en libérant CO₂,
dans lequel la première étape de procédé et la seconde étape de procédé sont réalisées en alternance dans une ou plusieurs unité(s) de réacteur de même type, ou la première étape de procédé est réalisée dans une première unité de réacteur et la seconde étape de procédé dans une seconde unité de réacteur, les deux unités étant couplées ensemble en formant un circuit cyclique ou fermé du matériau absorbant.

2. Procédé selon la revendication 1, **caractérisé de plus en ce qu'**on utilise comme matériau absorbant un oxyde métallique du type MₓO_{y} ou un métalloxocarbonate du type MₓO_{y} (CO₃)_{z}, où M désigne Mg, Ca, Sr, Ba, La, Mn ou Y, et x, y et z désignent des nombres entiers, ou de l'hydrotalcite ou un composé de carbonate complexe ayant une matrice de maintien de la structure du type (M²⁺)ₓ(M³⁺)_{y}(OH)_{z}CO₃ * n . H₂O, ou un mélange des matériaux cités.

3. Procédé selon la revendication 1 ou 2, **caractérisé de plus en ce que** la première étape de procédé comporte un reformage à la vapeur à une température comprise entre environ 200 °C et environ 900 °C, avec séparation de CO₂ essentiellement complète par le matériau absorbant, pour générer un gaz essentiellement exempt de CO₂ et riche en hydrogène.

4. Procédé selon la revendication 1 ou 2, **caractérisé de plus en ce que** la première étape de procédé comporte une séparation du CO₂ partielle et contrôlée par le matériau absorbant, pour générer un gaz de synthèse conditionné ayant une fraction de CO₂ prédéfinie adaptée à une réaction de synthèse ultérieure.

5. Procédé selon l'une des revendications 1 à 4, **caractérisé de plus en ce que** la première étape de procédé comporte une pyrolyse de la charge contenant du carbone et un reformage à la vapeur du produit gazeux de la pyrolyse, la pyrolyse et/ou le reformage à la vapeur étant réalisés en présence du matériau absorbant liant CO₂ de façon exothermique.

6. Procédé selon l'une des revendications 1 à 5, **caractérisé de plus en ce que**, dans la première étape de procédé, on réalise une pyrolyse de la charge contenant du carbone en présence du matériau absorbant liant CO₂ de façon exothermique et **en ce que** la seconde étape de procédé comporte une combustion du coke de pyrolyse.

7. Procédé selon l'une des revendications 1 à 6, **caractérisé de plus en ce que**, dans une première étape de procédé, on génère un gaz riche en hydrogène et comportant une faible teneur en dioxyde de carbone et **en ce qu'**on le soumet ensuite à un procédé de méthanisation pour le purifier du CO.

8. Procédé selon l'une des revendications 1 à 7, **caractérisé de plus en ce que** lors d'un démarrage à froid, on injecte de l'eau en excès, ou avant l'ajout de la charge contenant du carbone, dans un espace de réaction pour pyrolyse et/ou reformage à la vapeur contenant le matériau absorbant liant CO₂, jusqu'à ce que l'espace réactionnel ait atteint sa température d'exploitation ou de fonctionnement.

9. Dispositif de génération d'un gaz riche en hydrogène et à faible teneur en dioxyde de carbone ou d'un gaz de synthèse conditionné à partir d'une substance mise en oeuvre ou charge contenant du carbone, en utilisant une réaction de pyrolyse et/ou de reformage à la vapeur, en particulier pour réaliser le procédé selon l'une des revendications 1 à 8,
**caractérisé par** une construction composée
- d'au moins une unité de réacteur pour pyrolyse et/ou reformage à la vapeur destinée à réaliser la pyrolyse et/ou le reformage à la vapeur de la charge en présence d'un matériau absorbant liant CO₂ de façon exothermique, et séparant le produit gazeux généré de façon totale ou partielle et contrôlée, et
- d'un dispositif permettant une désorption thermique périodique du matériau absorbant à une température supérieure par rapport à la pyrolyse et/ou au reformage à la vapeur, avec libération de CO₂,
- le dispositif de désorption étant intégré à l'unité de réacteur pour pyrolyse et/ou de reformage à la vapeur, dans une unité de réacteur commune, qui est exploitée en alternance selon une exploitation en pyrolyse / reformage à la vapeur et selon une exploitation en désorption, ou l'unité de réacteur pour pyrolyse et/ou reformage à la vapeur étant formée d'une première unité de réacteur et le dispositif de désorption d'une seconde unité de réacteur, qui est couplée à la première unité de réacteur en formant un circuit cyclique ou fermé du matériau absorbant.

10. Dispositif selon la revendication 9, **caractérisé de plus en ce que** deux unités de réacteur parallèles (R1, R2) sont prévues, parmi lesquelles en alternance l'une travaille selon une exploitation en pyrolyse et/ou en reformage à la vapeur et l'autre selon une exploitation en désorption, le dispositif de désorption réalisant la désorption thermique du matériau absorbant.

11. Dispositif selon la revendication 9, **caractérisé de plus en ce que** l'unité de désorption comporte une unité de réacteur pour désorption (R4), des moyens pour amener le matériau absorbant à régénérer depuis l'unité de réacteur pour pyrolyse et/ou reformage à la vapeur (R3) vers l'unité de réacteur pour désorption, et des moyens pour amener le matériau absorbant régénéré vers l'unité de réacteur pour pyrolyse et/ou reformage à la vapeur.

12. Dispositif selon la revendication 11, **caractérisé de plus en ce que** sont prévues une unité de réacteur pour pyrolyse et une unité de réacteur pour reformage à la vapeur intégrée dedans ou couplée à celle-ci, ainsi qu'une unité de combustion du coke de pyrolyse formant l'unité de réacteur pour désorption, vers laquelle le matériau absorbant à régénérer issu de l'unité de réacteur pour pyrolyse et/ou de l'unité de réacteur pour reformage à la vapeur est amené, et depuis laquelle le matériau absorbant régénéré est recyclé vers l'unité de réacteur pour pyrolyse et/ou vers l'unité de réacteur pour reformage à la vapeur.

13. Dispositif selon l'une des revendications 9 à 12, **caractérisé de plus par** des moyens de séparation sélective de l'hydrogène, qui sont coordonnés à l'unité de réacteur pour pyrolyse et/ou reformage à la vapeur.

14. Dispositif selon la revendication 13, **caractérisé de plus par** des moyens d'amenée du rétentat de la séparation sélective d'hydrogène en tant que gaz combustible pour réaliser la désorption thermique du matériau absorbant.

15. Utilisation d'un dispositif selon l'une des revendications 9 à 14 pour alimenter un système de pile à combustible en gaz généré riche en hydrogène et à faible teneur en dioxyde de carbone, le gaz s'échappant de l'anode du système de pile à combustible servant de gaz combustible pour la désorption thermique du matériau absorbant.

16. Utilisation d'un dispositif selon l'une des revendications 9 à 14 pour un système de pile à combustible de type MCFC dans lequel le dioxyde de carbone libéré du matériau absorbant par le dispositif de désorption est amené à une électrode à l'air du système de pile à combustible.
